# EUROPEAN PATENT APPLICATION

(11) **EP 3 323 650 A1**
(43) Date of publication of application: **23.05.2018**
(21) Application number: 17158014.5
(22) Date of filing: 25.02.2017
(51) Int. Cl.: B60J 10/70

(54) **SEALING ASSEMBLY FOR VEHICLE WINDSCREENS**

(30) Priority: 16.11.2016 US 201615353026
(71) Applicant: Yih-Tair Industrial Co., Ltd., Taoyuan 32556 (TW)
(72) Inventor: LIN, PANG-YEN, 32556 Taoyuan (TW)
(74) Representative: Lang, Christian

(57) **Abstract**

A sealing assembly for a vehicle windscreen includes a profiled element (100) and a sealing lip (190). The profiled element includes a supporting rib (110) having a wedge shape, an upper section (120), a first projection (114) and a spring member (150). The upper section (120) extends upward from the supporting rib (110). The first projection (114) extends forward from a middle portion of the supporting rib (110). The spring member (150) extends from a lower portion of the supporting rib (110) and is bent to project forward, wherein a bay (140) is formed and surrounded by the supporting rib (110) and the spring member (150). The sealing lip (190) is flexible and is coupled to the supporting rib (110). The sealing lip (190) includes a body portion (192) and a second projection (194). The body portion (192) is anchored to the supporting rib (110) and the first projection (114). The second projection (194) extends downward from a lower portion of the body portion (192).

## Description

### Background

### 1 Technical Field

The disclosure relates to a sealing assembly for vehicle windscreens.

### 2. Description of the Related Art

German Patent Number DE 3 606 566 discloses a mount for the windscreen of a motor vehicle, which mount includes a split frame that releasably grips the windscreen on its inner and outer surfaces. There are also U-shaped profiles which clasp the lower edge of the pane and exhibit or form a catch-ridge for a water box cover disposed thereunder. The usual practice is to cement the U-shaped profile or a cranked section strip, e.g., as specified in German Patent Number DE 68 911 385, to the windscreen from the back (inside) by means of an adhesive string, e.g., a polyurethane string, in order to create a permanent bond therewith.

To prevent the windscreen wipers from sweeping beyond the lower outer limb of the profiled frame, they are conventionally arranged such that their position of rest is in the lower region of the windscreen above the profile. This impairs, inter alia, the air resistance coefficient that is proportional to the square of the speed of the vehicle whereby the fuel consumption rises considerably, particularly during travel at high speed. In addition, the noise level is also influenced.

It is therefore desirable to place the windscreen wiper at a lower position. As it is imperative to have a sealed transition between the lower edge of the windscreen and the water box cover, it is necessary to ensure that the wipers operate without incurring damage.

### Summary

The present disclosure provides a sealing assembly for vehicle windscreens.

In one embodiment, the sealing assembly of the present disclosure includes a profiled element having a hook shape in cross section and a sealing lip. The profiled element includes a supporting rib having a wedge shape, an upper section, a first projection and a spring member. The upper section extends upward from the support rib and has a contact region formed thereon to be attached to a rear surface of the vehicle windscreen. The first projection extends forward from a middle portion of the supporting rib, wherein the first projection is configured to be in contact with a bottom of the vehicle windscreen. The spring member extends from a lower portion of the supporting rib and is bent to project forward, wherein a bay is formed and surrounded by the supporting rib and the spring member. The bay is configured to receive a fin of a water box cover. The supporting rib and the spring member together are configured to clasp the fin of the water box cover. The sealing lip is flexible and is coupled to the supporting rib. The sealing lip includes a body portion and a second projection. The body portion is anchored to the supporting rib and the first projection, wherein the body portion is configured to be in contact with an upper surface of the water box cover. The second projection extends downward from a lower portion of the body portion, wherein the second projection is configured to be in contact with a front surface of the water box cover so that the fin of the water box cover is pushed further into the bay.

The foregoing, as well as additional objects, features and advantages of the disclosure will be more readily apparent from the following detailed description, which proceeds with reference to the accompanying drawings.

### Brief Description of the Drawings

FIG. 1 is an elevated perspective view of the sealing assembly for vehicles windscreens according to present disclosure.
FIG. 2 is a cross-sectional view taken along line A-A of FIG. 1.
FIG. 3 is a diagrammatic cross-sectional view of the mounted sealing assembly of FIG. 2.

### Detailed Description of the Preferred Embodiment

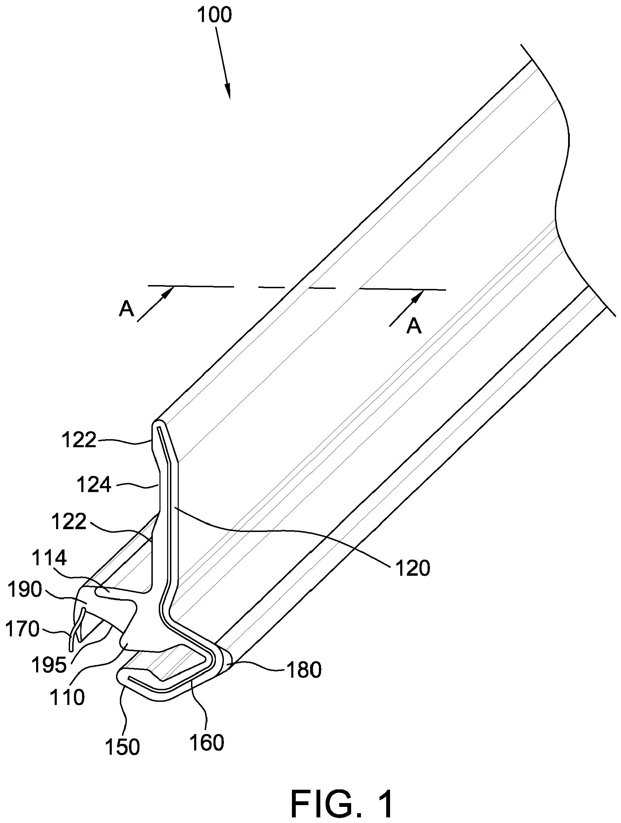

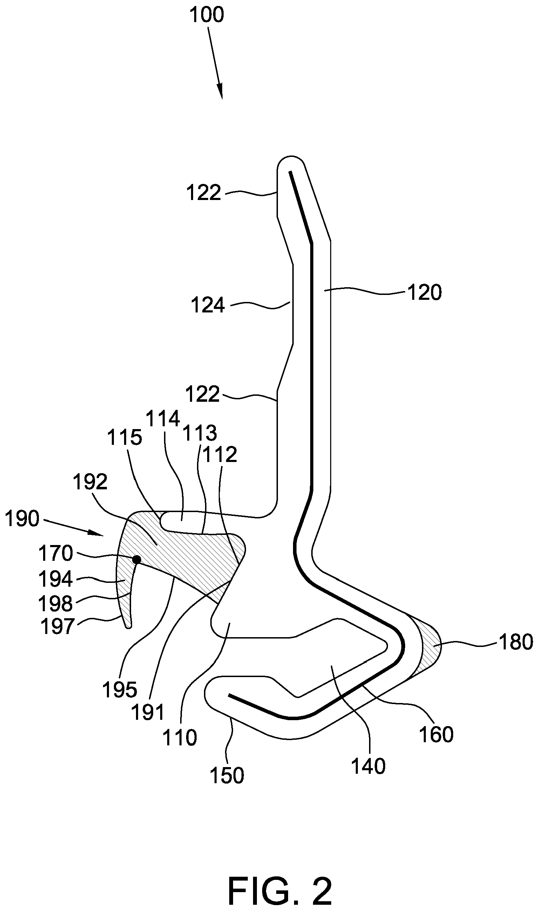

Reference is made to FIGS. 1 and 2, the sealing assembly for vehicle windscreens according to the present disclosure includes a profiled element 100 that has a generally hook shape in cross-section. The profiled element 100 includes in its central region a supporting rib 110 that has an inclined surface 112 above which there are two split contact regions 122 on an upper section 120. The upper section 120 extends upward from the supporting rib 110. The profiled element 100 may made from one or more plastics materials of suitable hardness, for example, polypropylene (PP), polyvinyl chloride (PVC), acrylonitrile/butadiene/styrene copolymers (ABS) or the like and/or combinations thereof. The profiled element 100 may include a reinforcement or stiffener 160 to resiliently brace a spring member 150 in its lower region. The material of the stiffener 160 may be an aluminum or steel strip. At a bend between the central region and a lower region there is provided a buffer strip 180 of softer material.

The supporting rib 110 is of wedge shape and a projection 114 extends forward or outward from the middle portion of the supporting rib 110. A sealing lip 190 is coupled to the inclined surface 112 of the supporting rib 110. The sealing lip 190 has a body portion 192 that is anchored to the inclined surface 112 on at least right side surface 191. The body portion 192 of the sealing lip 190 is also anchored to the lower portion 113 and rear end 115 of the projection 114. The top surface of the body portion 192 is substantially flush with the top surface of the projection 114 as shown in FIG. 2. The sealing lip 190 further has a wedge-shaped projection 194 extending downward from the lower left edge of the body portion 192. The projection 194 is flexible and extends from the body portion 192 at an acute angle relative to the lower surface 195 of the body portion 192 and is tapered away from the body portion 192. Therefore, the projection 194 has a root coupled to the body portion 192 and an opposed rear end thinner than the root. The projection 194 is slightly curved toward the supporting rib 110. The projection 194 has a convex outside surface 197 and a concave inside surface 198 facing the supporting rib 110. In addition, a string 170 has one part embedded in the intersection of the projection 194 and the body portion 192. The other parts of the string 170 are exposed out of the sealing lip 190.

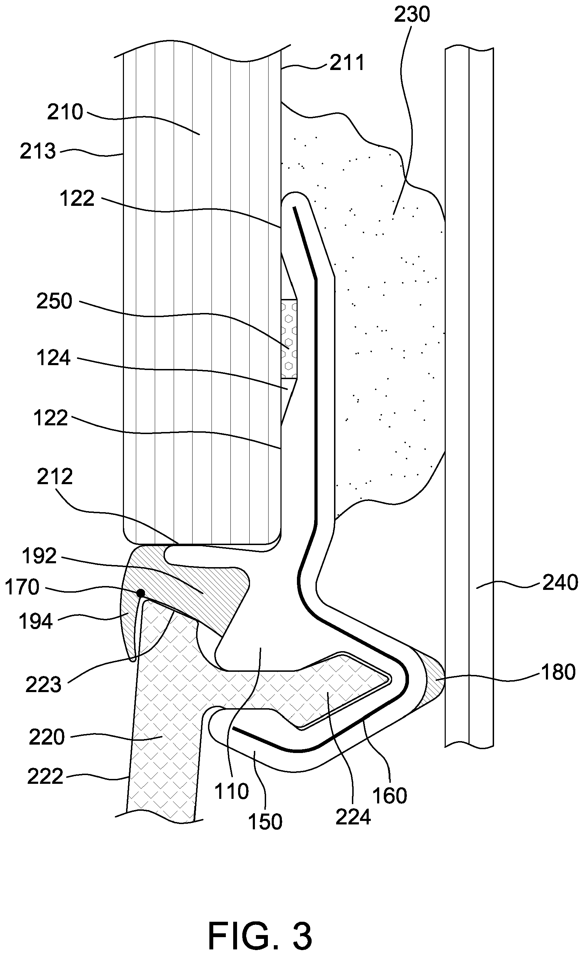

The installed sealing assembly of the present disclosure is shown in FIG. 3. The profiled element 100 is fixed to the back of a windscreen 210 by means of an overlapping adhesive 230, the inner surface of which bears flat against the vehicle body 240. The profiled element 100 bears directly against the rear surface 211 of the windscreen 210 by way of the two contact regions 122 which are located on the upper section 120. There is a recess 124 is formed on the upper section 120 between the two contact regions 122. The recess 124 is opposite to the windscreen 210 at a small distance. An adhesive layer 250 may be filled in the recess 124 such that the entire upper region of the profiled element 100 virtually is adhered flat to the rear surface 211 of the windscreen 210. The rear surface 211 is a surface opposing to the front surface 213 of the windscreen 210 on which raindrops fall.

A groove is formed on the transition region from the upper to middle region of the profiled element 100 to engage the rear bottom edge of the windscreen 210. The wedge-shaped supporting rib 110 is adjacent to the groove and protrudes with its inclined surface 112 forward or outward. The lower surface of the supporting rib 110 extends backward or inward by way of a bay 140 whose rearmost part is opposite to the buffer strip 180. From there the spring member 150 extends and project forward or outward. This part of the profiled element 100 clasps a fin 224 of the water box cover 220. The fin 224, supporting rib 110 and spring member 150 therefore form snap-locking means. The reinforcement or stiffener 160 follows the general hook shape of the profiled element 100, but may also be shorter than drawn.

The windscreen 210 is, at its bottom edge 212, in frictional and form-fitting contact with both the sealing lip 190 and projection 114. The sealing lip 190 is a solid body of soft material and the soft material is preferably a thermoplastic elastomer (TPE), thermoplastic polyolefin (TPO), a microcellular rubber or some other suitable material. The lower surface 195 of the body portion 192 bears snugly against the upper surface 223 of a water box cover 220. The projection 194 bears, especially at its rear end, directly against the front surface 222 of the water box cover 220. The projection 194 presses against the water box cover 220 so that the fin 224 of the water box cover 220 may be further pushed into the bay 140 of the profiled element 100 and therefore form stronger snap-locking.

The disclosure is not restricted to any of the embodiments described above but can be modified in many ways. In particular, a great variety of combinations of materials for the sealing lip 190 and the profiled element 100 can be used over and above the embodiments described heretofore. Suitable materials are, for example, TPE, TPO, PP, PVC, PVC/ABS or other thermoplastic plastics materials.

In summary, it may be stated that a preferred sealing assembly for vehicle windscreens embodies a profiled element 100 that includes a spring member 150 and has the shape of a hook in cross-section. The contact regions 122 of the profiled element 100 are attached to the rear surface 211 of the windscreen 210 and the bottom edge 212 of the windscreen 210 is in frictional contact with the sealing lip 190 and the projection 114 of the profiled element 100. The profiled element 100 is designed for sealed locking engagement with the fin 224 of the water box cover 220. The sealing lip 190 is positioned to fit between the bottom edge 212 of the windscreen 210 and the upper surface 223 of the water box cover 220. The sealing lip 190 projects outward together with the supporting rib 110 to form a resilient clamping and supporting element between the bottom edge 212 of the windscreen 210 and the fin 224. At least one side surface 191 of the sealing lip 190 is firmly bonded to the inclined surface 112 of the profiled element 100. The profiled element 100 and/or the sealing lip 190 may be of a combination of materials, for example they may form composite elements that are soft on the outside and hard on the inside. The reinforcement or stiffener 160 increases the elasticity. In addition, the projection 194 of the sealing lip 190 presses against the front surface 222 of the water box cover 220 so that the fin 224 of the water box cover 220 may be further pushed into the bay 140 of the profiled element 100 and therefore form stronger sealed locking engagement with the profiled element 100. The exposed parts of the string 170 is configured for a technician to pull out the projection 194 when the flexible projection 194 is pressed between the lower surface 195 of the body portion 192 and the upper surface 223 of the water box cover 220 in the installation of the profiled element 100.

Although the preferred embodiments of the disclosure have been disclosed for illustrative purposes, those skilled in the art will appreciate that various modifications, additions and substitutions are possible, without departing from the scope and spirit of the disclosure as disclosed in the accompanying claims.

## Claims

1. A sealing assembly for a vehicle windscreen, comprising:
a profiled element (100) having a hook shape in cross section, the profiled element (100) comprising:
a supporting rib (110) having a wedge shape;
an upper section (120) extending upward from the supporting rib (110), the upper section (120) having a first contact region (122) formed thereon, wherein the first contact region (122) is configured to be attached to a rear surface (211) of the vehicle windscreen (210);
a first projection (114) extending forward from a middle portion of the supporting rib (110), wherein the first projection (114) is configured to be in contact with a bottom (212) of the vehicle windscreen (210); and
a spring member (150) extending from a lower portion of the supporting rib (110) and being bent to project forward, wherein a bay (140) is formed and surrounded by the supporting rib (110) and the spring member (150), the bay (140) is configured to receive a fin (224) of a water box cover (220), the supporting rib (110) and the spring member (150) together are configured to clasp the fin (224) of the water box cover (220); and
a flexible sealing lip (190) coupled to the supporting rib (110), the sealing lip (190) comprising:
a body portion (192) anchored to the supporting rib (110) and the first projection (114), wherein the body portion (192) is configured to be in contact with an upper surface (223) of the water box cover (220); and
a second projection (194) extending downward from a lower portion of the body portion (192), wherein the second projection (194) is configured to be in contact with a front surface (222) of the water box cover (220) so that the fin (224) of the water box cover (220) is further pushed into the bay (140).

2. The sealing assembly as claimed in claim 1, further comprising:
a string (170) having one part embedded in an intersection of the second projection (194) and the body portion (192), and another part exposed out of the sealing lip (190).

3. The sealing assembly as claimed in claim 1, wherein the second projection (194) extends from the body portion (192) at an acute angle relative to the lower portion (195) of the body portion (192).

4. The sealing assembly as claimed in claim 1, wherein the second projection (194) has a concave inside surface (198) facing the front surface (222) of the water box cover (220).

5. The sealing assembly as claimed in claim 4, wherein the second projection (194) has a convex outside surface (197) opposing to the inside surface (198).

6. The sealing assembly as claimed in claim 1, wherein the second projection (194) is substantially wedge-shaped.

7. The sealing assembly as claimed in claim 1, further comprising:
a resilient reinforcement (160) embedded in the supporting rib (110) and the spring member (150).

8. The sealing assembly as claimed in claim 1, further comprising:
a buffer strip (180) provided on the bend of the spring member (150).

9. The sealing assembly as claimed in claim 1, wherein the upper section (120) further has a second contact region (122) formed above the first contact region (122), a recess (124) is formed on the upper section (120) between the first and second contact regions (122), and the second contact region (122) is configured to be attached to the rear surface (211) of the vehicle windscreen (210).

10. The sealing assembly as claimed in claim 9, wherein the recess (124) is configured to receive an adhesive layer (250) such that the upper region of the profiled element (100) virtually is adhered flat to the rear surface (211) of the vehicle windscreen (210).

## Amended claims

### Amended claims in accordance with Rule 137(2) EPC.

1. A sealing assembly for a vehicle windscreen, comprising:
a profiled element (100) having a hook shape in cross section, the profiled element (100) comprising:
a supporting rib (110) having a wedge shape;
an upper section (120) extending upward from the supporting rib (110), the upper section (120) having a first contact region (122) formed thereon, wherein the first contact region (122) is configured to be attached to a rear surface (211) of the vehicle windscreen (210);
a first projection (114) extending forward from a middle portion of the supporting rib (110), wherein the first projection (114) is configured to be in contact with a bottom (212) of the vehicle windscreen (210); and
a spring member (150) extending from a lower portion of the supporting rib (110) and being bent to project forward, wherein a bay (140) is formed and surrounded by the supporting rib (110) and the spring member (150), the bay (140) is configured to receive a fin (224) of a water box cover (220), the supporting rib (110) and the spring member (150) together are configured to clasp the fin (224) of the water box cover (220); and
a flexible sealing lip (190) coupled to the supporting rib (110), the sealing lip (190) comprising:
a body portion (192) anchored to the supporting rib (110) and the first projection (114), wherein the body portion (192) is configured to be in contact with an upper surface (223) of the water box cover (220); and
a second projection (194) extending downward from a lower portion of the body portion (192), wherein the second projection (194) is configured to be in contact with a front surface (222) of the water box cover (220) so that the fin (224) of the water box cover (220) is further pushed into the bay (140)
**characterised in that**
the sealing assembly further comprises a string (170) having one part embedded in an intersection of the second projection (194) and the body portion (192), and another part exposed out of the sealing lip (190).

2. The sealing assembly as claimed in claim 1, wherein the second projection (194) extends from the body portion (192) at an acute angle relative to the lower portion (195) of the body portion (192).

3. The sealing assembly as claimed in claim 1, wherein the second projection (194) has a concave inside surface (198) facing the front surface (222) of the water box cover (220).

4. The sealing assembly as claimed in claim 3, wherein the second projection (194) has a convex outside surface (197) opposing to the inside surface (198).

5. The sealing assembly as claimed in claim 1, wherein the second projection (194) is substantially wedge-shaped.

6. The sealing assembly as claimed in claim 1, further comprising:
a resilient reinforcement (160) embedded in the supporting rib (110) and the spring member (150).

7. The sealing assembly as claimed in claim 1, further comprising:
a buffer strip (180) provided on the bend of the spring member (150).

8. The sealing assembly as claimed in claim 1, wherein the upper section (120) further has a second contact region (122) formed above the first contact region (122), a recess (124) is formed on the upper section (120) between the first and second contact regions (122), and the second contact region (122) is configured to be attached to the rear surface (211) of the vehicle windscreen (210).

9. The sealing assembly as claimed in claim 8, wherein the recess (124) is configured to receive an adhesive layer (250) such that the upper region of the profiled element (100) virtually is adhered flat to the rear surface (211) of the vehicle windscreen (210).
